# DEMANDE DE BREVET EUROPEEN

(11) **EP 4 553 554 A1**
(43) Date de publication de la demande: **14.05.2025**
(21) Numéro de dépôt: 24209709.5
(22) Date de dépôt: 30.10.2024
(51) Int. Cl.: G02B 6/44, G02B 6/38

(54) **CHEMISE DE RACCORD À FIBRES OPTIQUES, CASSETTE ASSOCIÉE ET PANNEAU DE BRASSAGE CORRESPONDANT**

(30) Priorité: 13.11.2023 FR 2312394
(71) Demandeur: Aginode Connect SASU, 08330 Vrigne aux Bois (FR)
(72) Inventeur: THORN, Nicolas, 08430 MONTIGNY SUR VENCE (FR); MIART, Freddy, 08000 CHARLEVILLE-MEZIERES (FR)
(74) Mandataire: Ipsilon

(57) **Abrégé**

Cette cassette de raccords à fibres optiques comporte au moins une paire de raccords à fibres optiques. Les raccords sont montés verticalement dans la cassette et sont mobiles en translation suivant un axe longitudinal. Dans au moins une paire de l'au moins une paire de raccords, les deux raccords sont en outre mobiles en rotation autour d'un axe vertical, l'un des deux raccords étant mobile en rotation dans un premier sens de rotation et l'autre des deux raccords étant mobile en rotation dans un second sens de rotation opposé au premier sens de rotation.

## Description

La présente invention se rapporte à une chemise de raccord à fibres optiques, à une cassette de raccords à fibres optiques associée et à un panneau de brassage de câbles à fibres optiques correspondant.

L'invention appartient au domaine des câbles optiques, appelés aussi ici câbles à fibres optiques. Plus particulièrement, l'invention appartient au domaine des dispositifs permettant le rangement, l'acheminement, le raccordement et la répartition de tels câbles.

Pour ce type d'opérations sur les câbles optiques, il est connu d'utiliser des raccords à fibres optiques, des cassettes contenant des raccords à fibres optiques, ainsi que des panneaux de brassage contenant des cassettes de raccords à fibres optiques.

Un panneau de brassage classique comporte généralement un certain nombre de cassettes. Chaque cassette comporte un certain nombre de raccords à fibres optiques. Ces raccords à fibres optiques permettent d'établir un certain nombre de connexions dans une installation optique.

Pour des installations optiques alimentant par exemple des centres de données (en anglais « data centers »), on connaît des panneaux de brassage dits à ultra-haute densité, qui permettent de connecter, sur une unité dénommée « 1U » par l'homme du métier, jusqu'à 144 fibres optiques ou 72 fiches dites MPO (fibre optique multiconducteur à serrage par clip, en anglais « Multi-fiber Push-On/Pull-Off »). De tels panneaux ultra-haute densité peuvent accueillir jusqu'à six cassettes de vingt-quatre connexions LC (c'est-à-dire via des connecteurs de type LC (connecteurs LUCENT, en anglais « Lucent Connectors »).

Ces solutions connues sont réalisées à base de cassettes de raccords fixes ou mobiles proposés en différentes modularités (par exemple, permettant d'établir douze connexions ou vingt-quatre connexions). Les raccords, souvent en version quadruplex c'est-à-dire permettant d'établir quatre connexions, sont en général fixes dans les cassettes et sont le plus souvent montés en position horizontale.

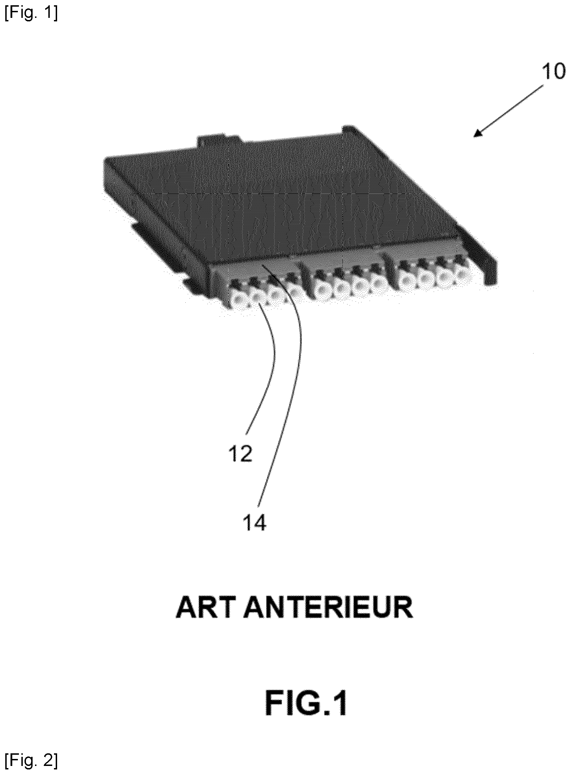

Les figures 1 à 3 illustrent plusieurs de ces solutions de l'art antérieur.

Comme illustré sur la figure 1, sur 1U (qui porte la référence 10 sur la figure 1) d'un panneau de brassage de l'art antérieur, dans le cas de raccords 12 horizontaux, des cassettes 14 contenant les raccords 12 peuvent présenter une hauteur égale à une hauteur de raccord 12 et être rangées horizontalement et côte à côte, dans le sens de la largeur du panneau de brassage. Les cassettes 14 peuvent être stratifiées sur trois niveaux. Le nombre de cassettes 14 pour 1U (trois cassettes dans l'exemple illustré) dépend de la modularité de ces dernières.

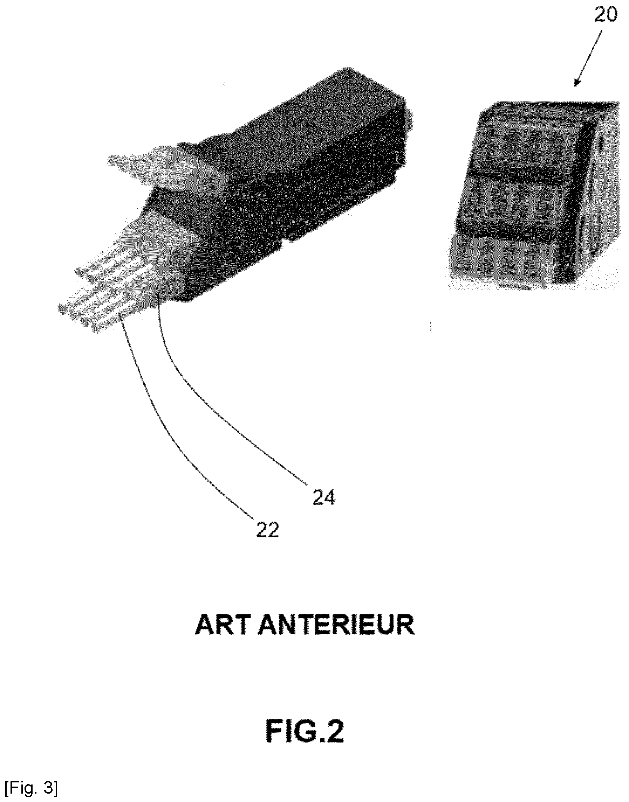

Comme illustré sur la figure 2, sur 1U (qui porte la référence 20 sur la figure 2) d'un panneau de brassage de l'art antérieur, dans le cas de raccords 22 horizontaux, des cassettes 24 contenant les raccords 22 peuvent présenter une hauteur égale à trois hauteurs de raccord 22 et être rangées horizontalement et côte à côte, dans le sens de la largeur du panneau de brassage, sur un seul et même niveau. Le nombre de cassettes 24 pour 1U (une seule cassette dans l'exemple illustré) dépend de la modularité de ces dernières.

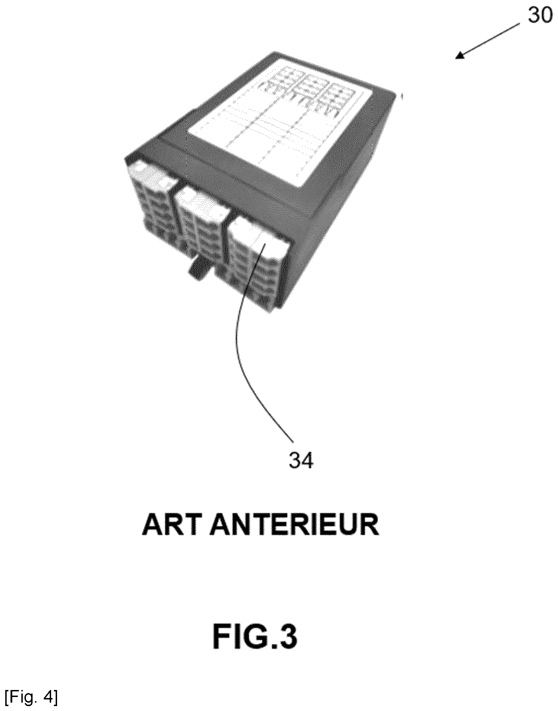

Comme illustré sur la figure 3, sur 1U (qui porte la référence 30 sur la figure 3) d'un panneau de brassage de l'art antérieur, dans le cas de raccords verticaux, des cassettes 34 contenant les raccords peuvent être rangées horizontalement et côte à côte, dans le sens de la largeur du panneau de brassage, sur un seul et même niveau. Le nombre de cassettes 34 pour 1U (trois cassettes dans l'exemple illustré) dépend de la modularité de ces dernières.

Le brassage se fait généralement par l'avant du panneau et les éléments en rapport avec l'alimentation sont généralement à l'arrière du panneau.

Les panneaux connus peuvent être fixes ou mobiles, selon leur conception.

Ces cassettes et panneaux de brassage de l'art antérieur présentent plusieurs inconvénients.

En particulier, l'accès aux fiches branchées de proche en proche est parfois difficile, ou réduit.

Quelques solutions de l'art antérieur proposent des mouvements des cassettes, par translation de celles-ci, ou des mouvements des raccords, par rotation de ceux-ci.

Toutefois, l'accès aux raccords à fibres optiques reste difficile et/ou complexe. En outre, les solutions connues ont pour autre désavantage de nécessiter de multiplier les pièces dans le panneau de brassage.

La présente invention a pour but de remédier aux inconvénients précités de l'art antérieur.

Dans ce but, la présente invention propose une chemise de raccord à fibres optiques, adaptée à contenir un raccord à fibres optiques, remarquable en ce qu'elle comporte trois faces formant un U, dont une face latérale, une face supérieure et une face inférieure, les faces supérieure et inférieure étant orthogonales à la face latérale, situées à des extrémités opposées de la face latérale et disposées en regard l'une de l'autre, les faces supérieure et inférieure comportant chacune sur sa face extérieure un premier pion de guidage et un second pion de guidage.

Grâce à la chemise de l'invention, le raccord une fois monté dans la chemise aura des degrés de liberté en translation et en rotation obtenus par l'intermédiaire des premiers et seconds pions de guidage. En effet, ces derniers sont adaptés à coopérer avec des éléments d'une cassette conforme à la présente invention.

Dans un mode particulier de réalisation, la chemise comporte en outre un clip de verrouillage.

Dans le même but que celui indiqué plus haut, la présente invention propose également un ensemble comprenant une chemise telle que succinctement décrite ci-dessus et un raccord à fibres optiques, cet ensemble étant remarquable en ce que le raccord est logé dans la chemise et est mobile et en ce que les premier et second pions de guidage sont adaptés à guider des mouvements du raccord.

Selon une caractéristique particulière de l'ensemble susmentionné, le clip de verrouillage est adapté à verrouiller en position l'ensemble susmentionné.

Dans le même but que celui indiqué plus haut, la présente invention propose ainsi une cassette de raccords à fibres optiques, la cassette comportant une paroi supérieure, une paroi inférieure parallèle à la paroi supérieure et deux parois latérales parallèles entre elles et orthogonales aux parois supérieure et inférieure, la cassette s'étendant suivant un premier axe dit longitudinal qui est parallèle au plan des parois supérieure et inférieure, un deuxième axe dit transversal qui est parallèle au plan des parois supérieure et inférieure et qui est orthogonal au premier axe et un troisième axe dit vertical qui est parallèle au plan des parois latérales et qui est orthogonal aux premier et deuxième axes, la cassette comportant en outre au moins une paire de raccords à fibres optiques, la cassette étant remarquable en ce que :
les raccords sont montés chacun dans une chemise telle que succinctement décrite ci-dessus ;
la chemise est montée dans la cassette de sorte que le côté de plus grande dimension des raccords s'étend suivant l'axe vertical ;
la cassette comporte des rainures rectilignes et les raccords sont mobiles en translation dans les rainures rectilignes suivant l'axe longitudinal ; et
la cassette comporte des rainures incurvées et, dans au moins une paire de l'au moins une paire de raccords, les deux raccords sont en outre mobiles en rotation dans les rainures incurvées autour de l'axe vertical et dans un plan parallèle au plan des parois supérieure et inférieure de la cassette, l'un des deux raccords étant mobile en rotation dans un premier sens de rotation et l'autre raccord étant mobile en rotation dans un second sens de rotation opposé au premier sens de rotation.

Les pions des chemises sont en effet adaptés à guider les raccords dans les rainures susmentionnées.

En outre, le clip de verrouillage qui peut être présent sur la chemise permet de verrouiller en position, en fin de course après rotation, l'ensemble formé par le raccord et sa chemise.

L'invention présente de nombreux avantages.

Elle permet un accès plus rapide, plus facile et plus simple aux raccords à fibres optiques que dans l'art antérieur tout en ne nécessitant pas d'ajouter des pièces dans le panneau de brassage qui loge les cassettes.

Cela réduit les coûts, facilite l'installation des fibres optiques et contribue à l'obtention d'une densité de fibres élevée.

Les raccords peuvent être de type classique et peuvent par exemple être des raccords quadruplex, bien connus de l'homme du métier.

L'invention offre une grande simplicité d'installation et de mise en oeuvre du fait que la cassette est monobloc, ainsi qu'une accessibilité accrue par la possibilité de mobilité des cassettes et notamment du fait de la combinaison de translation et rotations des raccords.

Dans un mode particulier de réalisation, la cassette comporte en outre au moins un élément de préhension mobile, adapté à commander le mouvement de translation et le mouvement de rotation d'une paire de l'au moins une paire de raccords.

Dans un mode particulier de réalisation, l'élément de préhension mobile peut être une gâchette.

Dans le même but que celui indiqué plus haut, la présente invention propose également un panneau de brassage de câbles à fibres optiques, le panneau comportant une paroi supérieure et une paroi inférieure, la paroi inférieure présentant une face extérieure et une face intérieure opposée à la face extérieure, le panneau étant remarquable en ce qu'il comporte au moins une cassette telle que décrite succinctement ci-dessus, l'au moins une cassette étant disposée sur la face intérieure de la paroi inférieure du panneau.

Ainsi, l'invention propose un panneau de brassage ultra-haute densité offrant un accès rapide, facile et simple aux cassettes et aux raccords à fibres optiques logés dans ces cassettes. Le panneau peut par exemple présenter un format 1 U, soit une hauteur de 44,45 mm et une largeur de 19 pouces, soit 482,6 mm, permettant de connecter jusqu'à 144 fibres optiques ou 72 MPO, en accueillant jusqu'à six cassettes de vingt-quatre connexions LC.

Dans un mode particulier de réalisation où le panneau comporte au moins deux cassettes telles que décrites succinctement ci-dessus, le panneau est remarquable en ce que les au moins deux cassettes sont disposées sur au moins une partie de la largeur du panneau et sur un seul niveau.

La cinématique du panneau de brassage est simplifiée en raison du fait qu'il y a un seul niveau de cassettes mobiles.

Au surplus, l'invention permet une simplification du câblage et l'accroissement de l''espace de branchement par le mouvement des raccords.

Dans un mode particulier de réalisation, le panneau de brassage comporte six cassettes.

Cela permet de proposer un panneau à ultra-haute densité comme défini plus haut, six cassettes pouvant être logées dans un panneau de largeur 19 pouces, soit 482,6 mm.

Dans un mode particulier de réalisation, le panneau de brassage comporte un volet avant. Ce volet avant peut éventuellement être amovible, ce qui permet de le retirer au besoin et de faciliter ainsi encore davantage l'accès aux fiches LC.

### Brève description des dessins

D'autres aspects et avantages de l'invention apparaîtront à la lecture de la description détaillée ci-après de modes particuliers de réalisation, donnés à titre d'exemples nullement limitatifs, en référence aux dessins annexés, dans lesquels :
[Fig. 1], déjà décrite, est une représentation schématique d'une unité 1U d'un panneau de brassage de l'art antérieur ;
[Fig. 2], déjà décrite, est une représentation schématique d'une unité 1U d'un autre panneau de brassage de l'art antérieur ;
[Fig. 3], déjà décrite, est une représentation schématique d'une unité 1U d'un autre panneau de brassage de l'art antérieur ;
[Fig. 4] est une vue d'ensemble schématique en perspective de l'extérieur d'un panneau de brassage conforme à la présente invention, dans un mode particulier de réalisation ;
[Fig. 5] est une vue d'ensemble schématique partielle en perspective des cassettes contenues dans un panneau de brassage du type de la figure 4 dans un exemple particulier non limitatif où le panneau contient six cassettes, le volet avant du panneau étant en position ouverte, la paroi supérieure du panneau n'étant pas représentée ;
[Fig. 6] est une représentation schématique d'une cassette de la figure 5 ;
[Fig. 7] est une vue de face schématique du panneau de brassage de la figure 4 dans l'exemple particulier non limitatif où le panneau contient six cassettes, le volet avant du panneau étant en position ouverte ;
[Fig. 8] est une vue d'ensemble schématique en perspective du panneau de brassage de la figure 4 et de la cassette de la figure 6, illustrant le montage de la cassette dans le panneau par l'arrière de celui-ci ;
[Fig. 9] est une vue schématique partielle en perspective du panneau de brassage de la figure 4 et de la cassette de la figure 6, montrant la cassette une fois installée dans le panneau, après montage suivant l'exemple particulier non limitatif de la figure 8, la paroi supérieure du panneau n'étant pas représentée ;
[Fig. 10] est une vue d'ensemble schématique en perspective du panneau de brassage de la figure 4 et de la cassette de la figure 6, illustrant le montage de la cassette dans le panneau par l'avant de celui-ci ;
[Fig. 11] est une vue schématique partielle en perspective du panneau de brassage de la figure 4 et de la cassette de la figure 6, montrant la cassette une fois installée dans le panneau, après montage suivant l'exemple particulier non limitatif de la figure 10, la paroi supérieure du panneau n'étant pas représentée ;
[Fig. 12] est une représentation schématique partielle du panneau de brassage de la figure 4 contenant les six cassettes représentées sur les figures 5 et 7, illustrant le degré de liberté des cassettes en translation vers l'avant ;
[Fig. 13] est une représentation schématique d'un raccord conforme à la présente invention, dans un mode particulier de réalisation ;
[Fig. 14] et [Fig. 15] sont des représentations schématiques partielles, respectivement en perspective et en vue de dessus, d'une cassette conforme à l'invention, dans une situation où cette cassette contient des raccords conformes à l'invention, ces deux figures illustrant les degrés de liberté des raccords en translation et en rotation.
[Fig. 16] est une représentation schématique d'un organiseur arrière compris dans le panneau de brassage de la figure 4.
[Fig. 17] présente deux vues de dessous schématiques partielles d'une cassette conforme à la présente invention, dans un mode particulier de réalisation.
[Fig. 18] est une représentation schématique d'un mode particulier de réalisation d'une chemise adaptée à contenir un raccord conforme à la présente invention, dans une vue où le raccord est monté dans la chemise et une vue où chemise et raccord sont représentés séparément.
[Fig. 19] est une vue schématique agrandie d'une chemise, dans le mode particulier de réalisation de la figure 18.
[Fig. 20] est une vue de dessous schématique partielle agrandie d'une cassette conforme à la présente invention, dans un mode particulier de réalisation.
[Fig. 21] est une vue schématique agrandie d'un raccord monté dans sa chemise, dans le mode particulier de réalisation de la figure 18.

### Description de mode(s) de réalisation

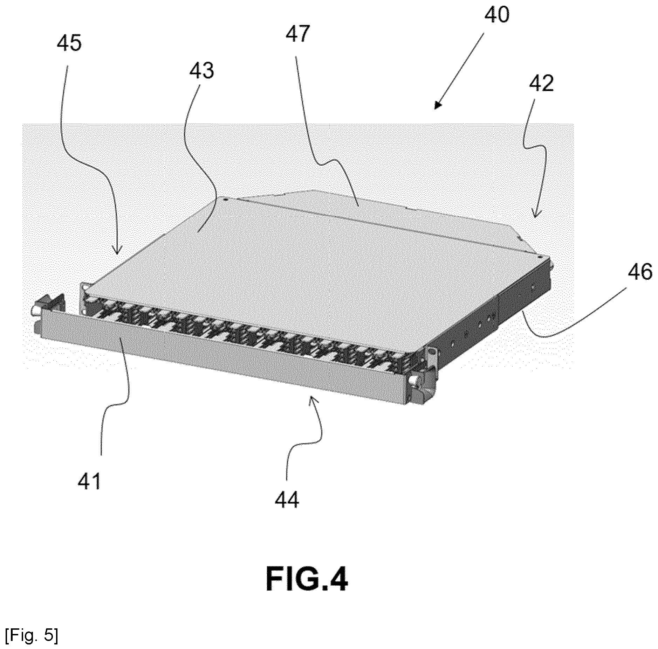

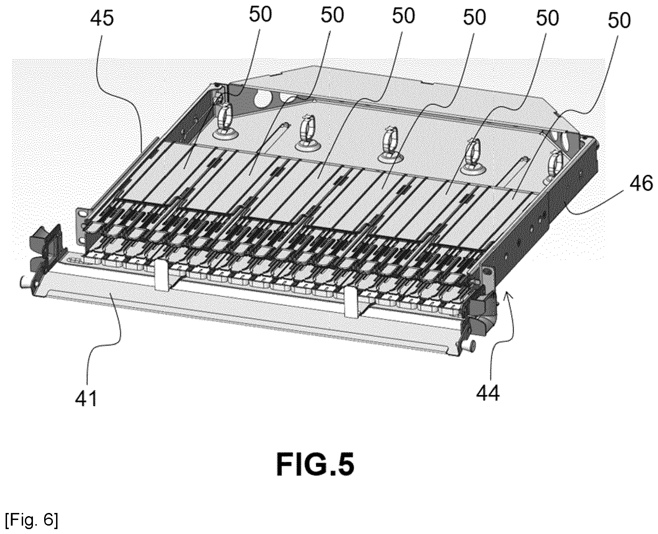

Comme le montre la figure 4, dans un mode particulier de réalisation, un panneau de brassage 40 de câbles à fibres optiques conforme à la présente invention peut comporter une ou plusieurs cassettes 50 de raccords à fibres optiques conformes à la présente invention. Les cassettes 50 sont décrites en détail ci-après en lien avec les figures 5 et suivantes.

Dans les modes particuliers de réalisation illustrés sur les figures 4 à 12, le panneau de brassage 40 est de forme parallélépipédique rectangle et comporte un volet avant 41 sur sa face avant. Le volet avant 41 est articulé entre une position fermée qui obture la face avant du panneau 40 et une position ouverte qui laisse apparaître l'intérieur du panneau 40 et qui permet notamment l'accès aux cassettes 50 lorsque le panneau 40 en contient.

De façon optionnelle, le volet avant 41 peut être amovible : il peut ainsi, au besoin, être retiré du panneau 40 pour faciliter encore plus l'accès aux fiches LC.

Les termes « connecteur », « fiche » et « raccord » sont utilisés dans la présente demande avec la signification habituelle suivante, bien connue de l'homme du métier : un « connecteur » optique se compose de deux « fiches » mises en contact physique entre elles par un « raccord ».

Le panneau 40 présente par ailleurs une face arrière 42, une paroi supérieure 43, une paroi inférieure 44 et deux parois latérales 45, 46.

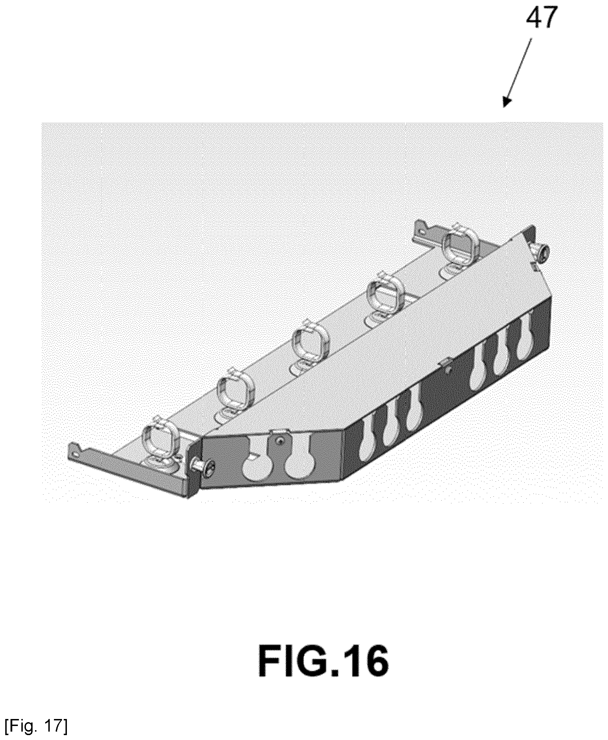

Le panneau 40 peut également disposer d'un organiseur arrière 47 permettant d'arrimer les câbles entrants. Un tel organiseur arrière 47 est présent dans le mode particulier de réalisation de la figure 4 et est illustré séparément sur la figure 16.

Sur la figure 5, la paroi supérieure 43 n'est pas représentée afin de rendre visible l'intérieur du panneau de brassage 40 et son contenu, pour une meilleure compréhension de la présente description. Par ailleurs, le volet 41 du panneau 40 est en position ouverte.

Comme le montre la figure 5, le panneau de brassage 40 est adapté à contenir un certain nombre N de cassettes 50, N étant un entier positif.

La paroi inférieure 44 du panneau de brassage 40 présente une face extérieure, ainsi qu'une face intérieure du côté de la paroi inférieure 44 opposé au côté présentant la face extérieure.

Lorsque le panneau de brassage 40 contient une ou plusieurs cassettes 50, celles-ci sont disposées sur la face intérieure de la paroi inférieure 44 du panneau.

Lorsque le panneau de brassage 40 contient au moins deux cassettes 50, celles-ci sont disposées sur au moins une partie de la largeur du panneau 40 et sur un seul niveau, à l'un quelconque des emplacements qui y sont libres, de sorte qu'elles peuvent, mais non nécessairement, avoir une cassette voisine.

Dans l'exemple non limitatif illustré sur la figure 5, six cassettes 50 de raccords à fibres optiques sont disposées côte à côte sur la face intérieure de la paroi inférieure 44 du panneau 40 et occupent, dans cet exemple nullement limitatif, toute la largeur du panneau 40.

En variante, le panneau de brassage 40 peut contenir un nombre N de cassettes, N étant un entier positif différent de 6.

L'ensemble formé par les cassettes 50 une fois disposées dans le panneau de brassage 40 peut éventuellement ne pas occuper toute la largeur du panneau, des espaces étant donc laissés libres et ce pour divers usages, dont par exemple l'ajout ultérieur de cassettes supplémentaires et/ou d'autres éléments.

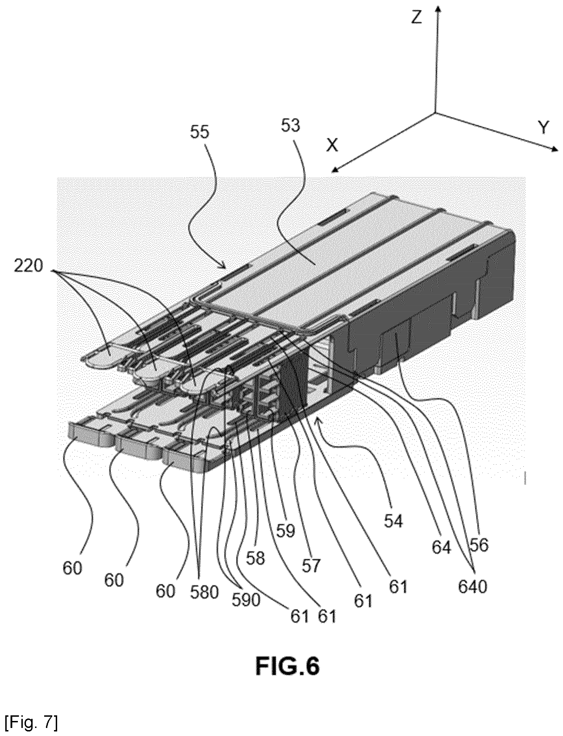

Comme le montre la figure 6, une cassette 50 conforme à la présente invention comporte une paroi supérieure 53, une paroi inférieure 54 parallèle à la paroi supérieure 53 et deux parois latérales 55, 56 parallèles entre elles et orthogonales aux parois supérieure 53 et inférieure 54.

La cassette 50 s'étend suivant trois axes X, Y et Z deux à deux orthogonaux définis comme suit. Le premier axe X est dit longitudinal et est parallèle au plan des parois supérieure 53 et inférieure 54, ce qui signifie que l'axe X appartient à un plan parallèle au plan des parois supérieure 53 et inférieure 54. Le deuxième axe Y est dit transversal, est parallèle au plan des parois supérieure 53 et inférieure 54, ce qui signifie que l'axe Y, comme l'axe X, appartient à un plan parallèle au plan des parois supérieure 53 et inférieure 54. L'axe Y est orthogonal à l'axe X. Le troisième axe Z est dit vertical, est parallèle au plan des parois latérales 55, 56, ce qui signifie que l'axe Z appartient à un plan parallèle au plan des parois latérales 55, 56. L'axe Z est orthogonal aux axes X et Y.

La cassette 50 comporte en outre au moins une paire 57 de raccords 58, 59 à fibres optiques.

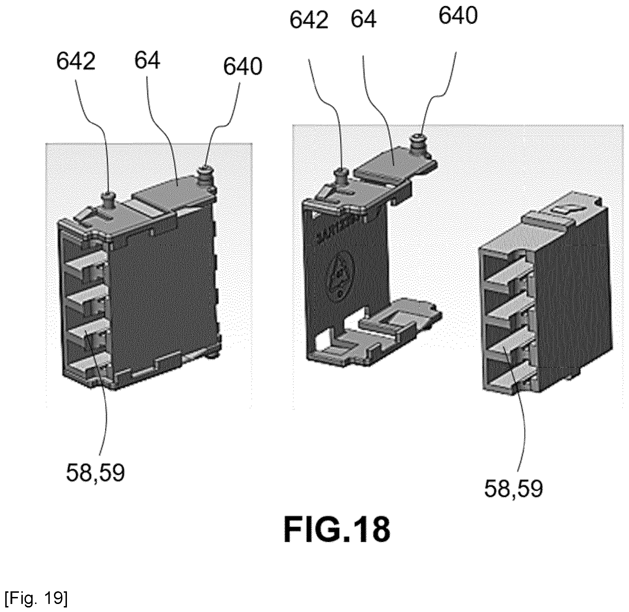

Conformément à la présente invention, chacun des raccords 58, 59 est monté en étant logé individuellement dans une chemise 64, visible sur la figure 6 et sur les vues agrandies de la figure 18. Chaque chemise 64 est montée dans la cassette 50 de sorte que le côté de plus grande dimension des raccords s'étend suivant l'axe vertical Z.

En outre, la cassette 50 comporte, d'une part, des rainures rectilignes 61 dans lesquelles les raccords 58, 59 sont mobiles en translation par glissement suivant l'axe longitudinal X et, d'autre part, des rainures incurvées 580, 590 dans lesquelles les raccords 58, 59 d'au moins une paire de raccords parmi toutes les paires 57 de raccords sont mobiles en rotation autour de l'axe vertical Z et dans un plan parallèle au plan des parois supérieure 53 et inférieure 54 de la cassette 50, l'un des deux raccords étant mobile en rotation dans un premier sens de rotation et l'autre raccord étant mobile en rotation dans un second sens de rotation opposé au premier sens de rotation, c'est-à-dire que les deux raccords 58, 59 de la paire 57 de raccords considérée tournent en s'écartant l'un de l'autre.

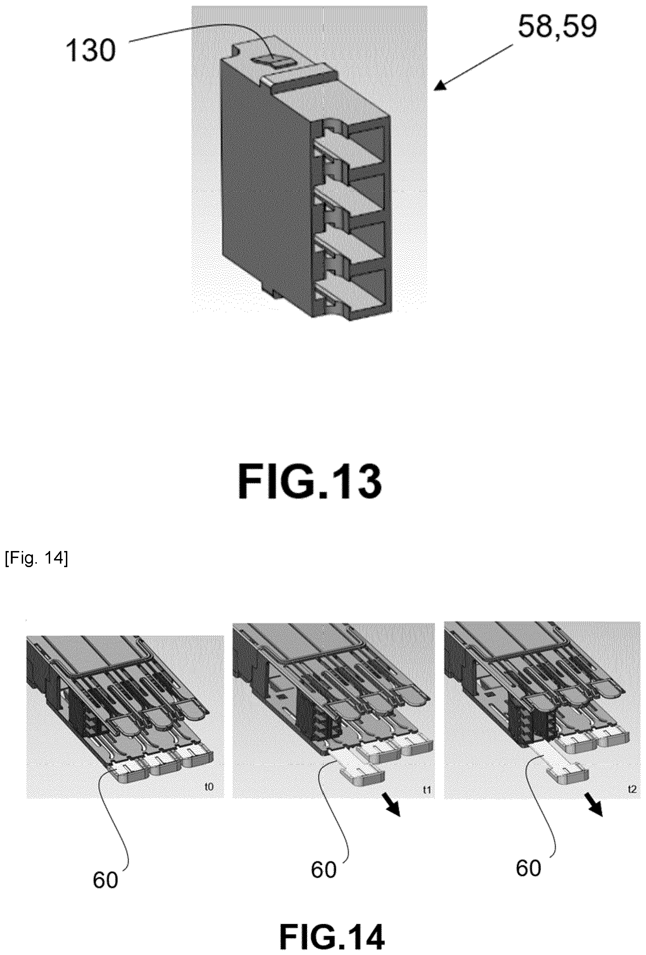

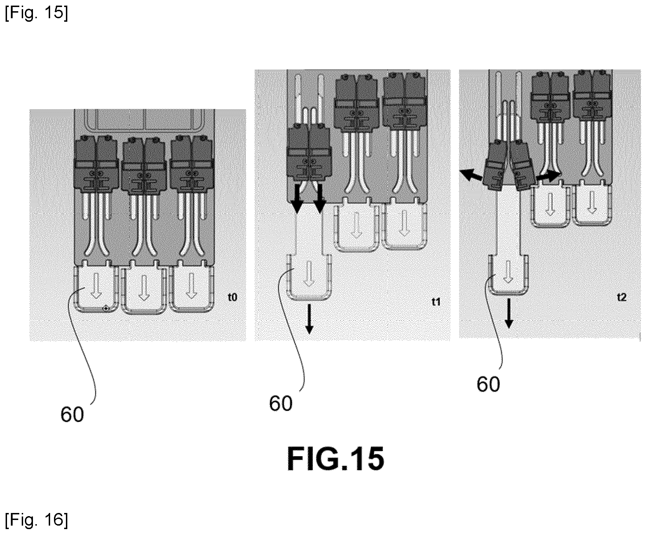

Les degrés de liberté des raccords 58, 59 à la fois en translation et en rotation sont détaillés plus loin en lien avec les figures 14 et 15.

De façon optionnelle, la cassette 50 peut comporter en outre un élément 60 de préhension mobile, adapté à commander le mouvement de translation de chaque paire 57 de raccords 58, 59. A titre d'exemple nullement limitatif, l'élément 60 de préhension mobile peut être une gâchette, comme illustré dans le mode particulier de réalisation de la figure 6.

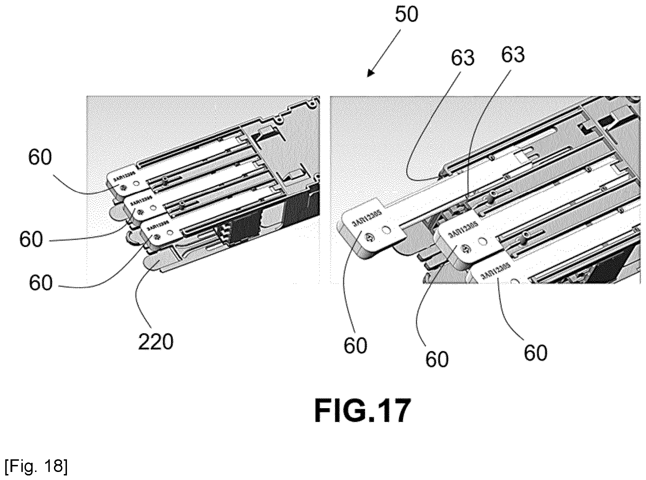

Comme le montrent les vues de dessous schématiques partielles de la cassette 50 à gauche et à droite sur la figure 17 (la vue à droite étant agrandie par rapport à la vue à gauche), l'élément 60 de préhension mobile peut être logé dans une forme aménagée sous la cassette 50. Cette forme permet la translation longitudinale de l'élément 60 de préhension mobile.

De façon optionnelle, comme dans l'exemple nullement limitatif de la figure 17, cette forme peut présenter deux dents 63 de maintien à l'extrémité du côté extérieur de la face inférieure de la cassette 50, pour contribuer au maintien de l'élément 60 de préhension.

La figure 18 illustre, à gauche, un mode particulier de réalisation de la chemise 64 contenant un raccord (58 ou 59) et à droite, la chemise 64 et le raccord séparés.

L'élément 60 de préhension coopère avec les raccords 58, 59 par le biais de leurs chemises 64 respectives.

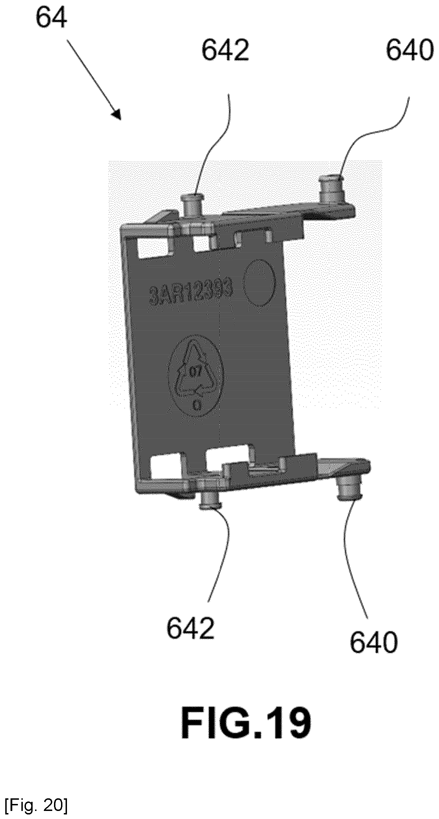

Comme le montre la vue agrandie de la figure 19, la chemise 64 de raccord à fibres optiques conforme à la présente invention est adaptée à contenir un raccord 58, 59 à fibres optiques.

Conformément à l'invention, la chemise 64 comporte trois faces formant un U, dont une face latérale, une face supérieure et une face inférieure. Les faces supérieure et inférieure sont orthogonales à la face latérale, situées à des extrémités opposées de la face latérale et disposées en regard l'une de l'autre. Les faces supérieure et inférieure comportent chacune sur sa face extérieure un premier pion 640 de guidage et un second pion 642 de guidage.

Autrement dit, la chemise 64 comporte deux pions de guidage sur sa face supérieure et deux pions de guidage sur sa face inférieure, la chemise 64 présentant une symétrie du fait que ces deux paires de pions de guidage sont agencées en regard l'une de l'autre.

Les premiers pions 640 de guidage ne sont pas nécessairement de mêmes dimensions que les seconds pions 642 de guidage.

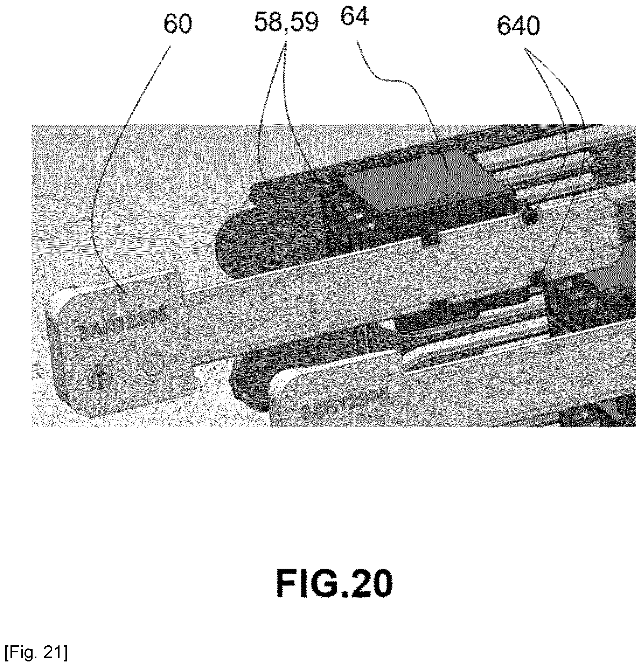

Comme le montre la figure 20, les premiers pions 640 de guidage peuvent être de plus grands dimensions que les seconds pions 642 de guidage pour être adaptés au mieux à leurs fonctions respectives de guidage.

Le plus gros pion 640 sur la face inférieure de la chemise 64 est adapté à se loger dans l'élément 60 de préhension (par exemple, mais non nécessairement, par clippage), de sorte qu'il permet la translation et la rotation du raccord 58, 59 lors du mouvement longitudinal de l'élément 60 de préhension.

Les plus gros pions 640 sont adaptés à être guidés par les rainures rectilignes 61 situées sur les parois inférieure et supérieure de la cassette 50, tandis que les plus petits pions 642 sont adaptés à être guidés par les rainures incurvées 580 et 590 situées sur les parois inférieure et supérieure de la cassette 50 et qui permettent respectivement la rotation opposée des raccords 58, 59.

L'élément 60 de préhension est mobile en translation, tandis que, grâce au guidage des plus petits pions 642 par les rainures incurvées 580 et 590 sur les faces supérieure et inférieure de la cassette 50, chacun des deux raccords 58, 59 d'une paire 57 de raccords est mobile en rotation dans un sens opposé à l'autre raccord 58, 59 de la même paire 57.

Le panneau 40 de brassage peut comporter en partie inférieure des éléments de guidage qui permettent la mise en place par l'avant ou par l'arrière de la cassette 50 dans le panneau 40 et le déplacement longitudinal de la cassette 50 pour verrouillage en position ou déverrouillage pour extraction.

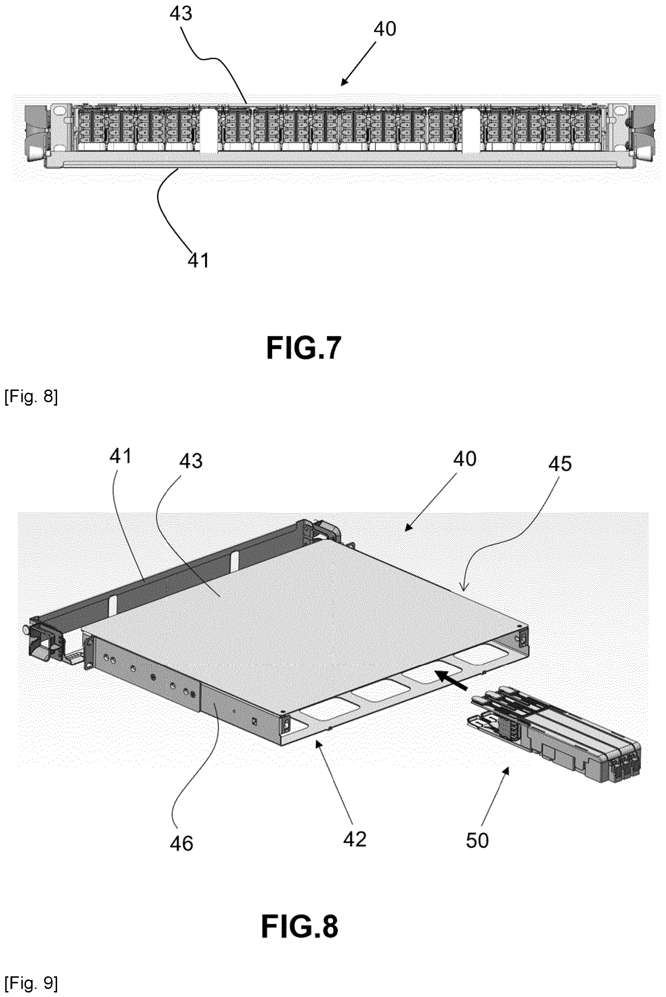

Dans l'exemple nullement limitatif de la figure 7, qui montre une vue de face schématique du panneau 40 de brassage de la figure 4, le panneau 40 contient six cassettes, le volet avant 41 du panneau 40 étant en position ouverte.

Les cassettes 50 de raccords 58, 59 à fibres optiques peuvent se monter dans le panneau 40 soit par la face arrière 42 du panneau 40, soit par sa face avant.

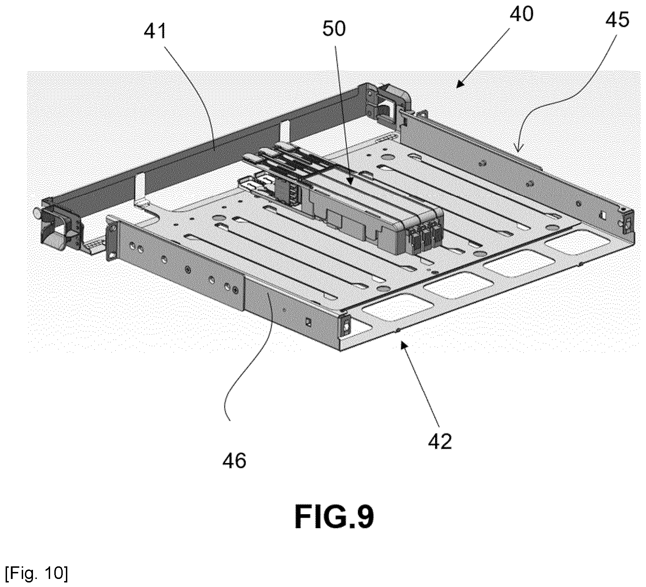

Les figures 8 et 9 illustrent le montage d'une cassette 50 par la face arrière 42 du panneau 40. La figure 8 montre le sens de montage et la figure 9 montre la cassette 50 une fois montée.

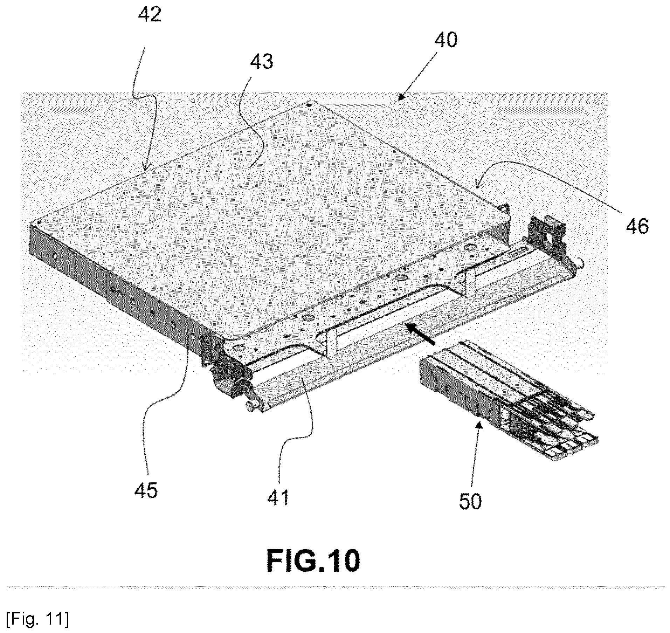

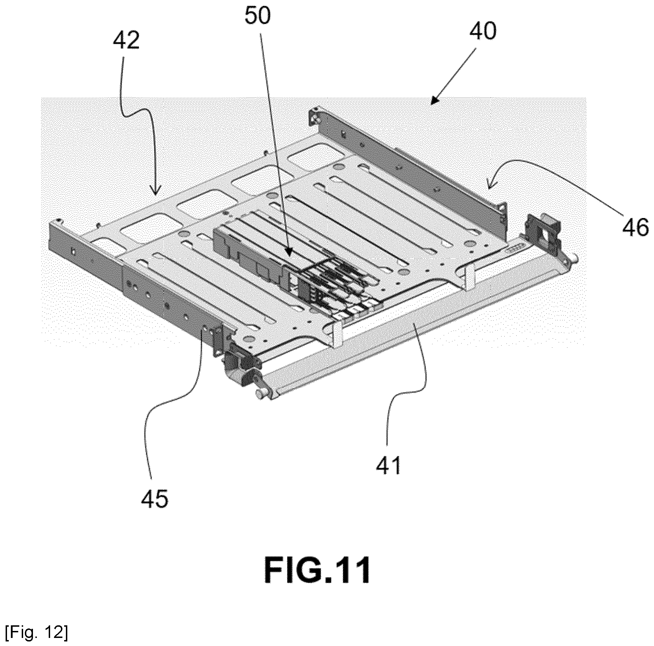

Les figures 10 et 11 illustrent le montage d'une cassette 50 par la face avant du panneau 40. La figure 10 montre le sens de montage et la figure 11 montre la cassette 50 une fois montée.

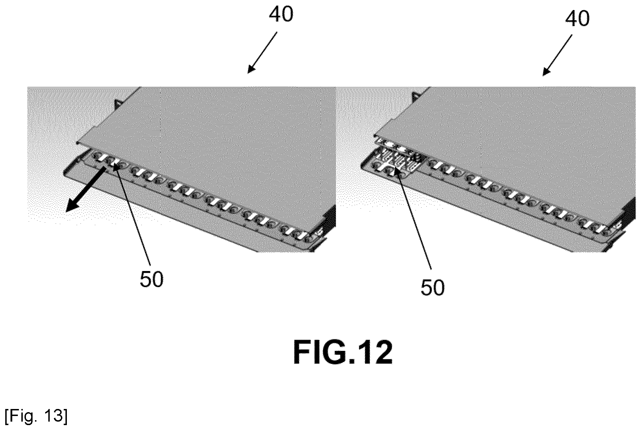

Comme le montrent les deux vues partielles de la figure 12, de façon optionnelle, les cassettes 50, qu'elles aient été montées par l'avant ou par l'arrière du panneau 40, peuvent disposer, une fois en place, d'un mouvement de translation vers l'avant pour dégager l'accès aux raccords 58, 59.

Dans les cassettes 50 sont montés verticalement des raccords 58, 59 conformes à la présente invention.

Un mode particulier de réalisation d'un raccord 58, 59 est illustré par la figure 13. Dans cet exemple de réalisation nullement limitatif, le raccord 58, 59 présente une languette 130 qui sert à maintenir le raccord en place lorsqu'il est monté.

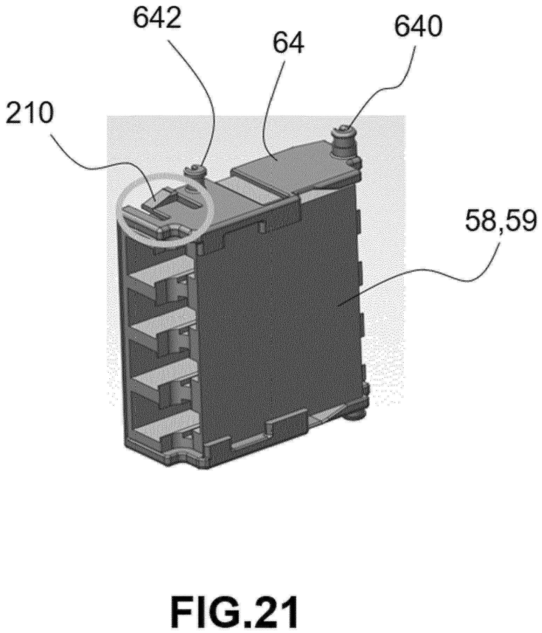

La figure 21 montre le raccord 58, 59 de la figure 13 monté dans sa chemise 64.

Comme repéré sur la figure 21 par un cercle en trait épais, dans un mode particulier de réalisation, la chemise 64 comporte un clip 210 adapté à verrouiller en position, en fin de course après rotation, l'ensemble formé par le raccord et sa chemise. Dans ce mode particulier de réalisation, la cassette 50 comporte un levier 220 (visible sur les figures 6 et 17) adapté à déverrouiller, lorsqu'il est levé par un utilisateur, une paire 57 de raccords 58, 59 arrivés en fin de course après rotation dans des directions opposées l'un à l'autre, c'est-à-dire en s'éloignant l'un de l'autre.

Les raccords 58, 59 peuvent être par exemple de type LC et par exemple de type quadruplex, ces types de raccords étant donnés à titre d'exemples nullement limitatifs. La chemise 64 étant symétrique, les raccords 58 et 59 sont identiques et il suffit de les monter en sens inverse au sein d'une même paire 57.

Comme le montrent les figures 14 et 15, dans un mode particulier de réalisation où la cassette 50 comporte un élément 60 de préhension mobile par paire 57 de raccords 58, 59, par exemple sous forme d'une gâchette, l'état t0 est l'état initial, puis lorsqu'on tire sur une gâchette, dans le sens indiqué par la flèche sur les figures 14 et 15 (état t1, puis état t2 postérieur à t1 lorsqu'on continue de tirer sur la gâchette), la paire 57 de raccords associée à cette gâchette combine, conformément à l'invention, un mouvement de translation et un mouvement de rotation, également indiqués par des flèches sur la figure 15 et déjà décrits plus haut. Le mouvement de rotation des raccords 58, 59 d'une même paire 57 les fait s'écarter l'un de l'autre, ce qui rend particulièrement aisées les opérations de connexion, d'installation, de retrait et/ou de maintenance à réaliser sur les raccords.

En variante, en l'absence d'élément 60 de préhension, le mouvement en translation et en rotation peut être commandé en manipulant directement les raccords 58, 59. Cela est toutefois moins pratique.

Les degrés de liberté en translation et en rotation dont sont dotés les raccords 58, 59 permettent de dégager davantage d'espace que dans les solutions connues pour l'accès aux fiches, par exemple à des fiches LC.

La mobilité des raccords dans sa définition conforme à l'invention est donc particulièrement avantageuse.

En particulier, lorsque les raccords 58, 59 sont de type verticaux et quadruplex, la mobilité des cassettes contenant ces raccords rend extrêmement aisé l'accès aux raccords vers l'avant du panneau de brassage 40.

En effet, dans la présente invention, contrairement aux solutions connues, le seul mouvement de l'élément 60 de préhension (et non de la cassette 50 dans son intégralité) permet le mouvement de la paire 57 de raccords 58, 59 et leur écartement mutuel. La cassette 50 peut rester en place dans son logement.

Ainsi, le mode de réalisation de la figure 12 où la cassette 50 est en outre libre d'avancer dans une certaine mesure hors du panneau 40 de brassage a été donné à titre d'exemple non limitatif en tant que variante apportant encore plus de facilité d'accès, mais aucun déplacement de la cassette 50 n'est nécessaire pour obtenir les avantages de l'invention énoncés plus haut.

## Revendications

1. Chemise (64) de raccord à fibres optiques, adaptée à contenir un raccord (58, 59) à fibres optiques, **caractérisée en ce qu'**elle comporte trois faces formant un U, dont une face latérale, une face supérieure et une face inférieure, les faces supérieure et inférieure étant orthogonales à la face latérale, situées à des extrémités opposées de la face latérale et disposées en regard l'une de l'autre, les faces supérieure et inférieure comportant chacune sur sa face extérieure un premier pion (640) de guidage et un second pion (642) de guidage.

2. Chemise (64) selon la revendication 1, **caractérisée en ce qu'**elle comporte en outre un clip (210) de verrouillage.

3. Ensemble comprenant une chemise (64) selon la revendication 1 ou 2 et un raccord (58, 59) à fibres optiques, ledit ensemble étant **caractérisé en ce que** ledit raccord (58, 59) est logé dans ladite chemise (64) et est mobile et **en ce que** lesdits premier et second pions de guidage (640, 642) sont adaptés à guider des mouvements dudit raccord (58, 59).

4. Ensemble selon la revendication 3 prise dans son rattachement à la revendication 2, **caractérisé en ce que** ledit clip (210) de verrouillage est adapté à verrouiller en position ledit ensemble.

5. Cassette (50) de raccords à fibres optiques, ladite cassette (50) comportant une paroi supérieure (53), une paroi inférieure (54) parallèle à la paroi supérieure (53) et deux parois latérales (55, 56) parallèles entre elles et orthogonales aux parois supérieure (53) et inférieure (54), ladite cassette (50) s'étendant suivant un premier axe (X) dit longitudinal qui est parallèle au plan des parois supérieure (53) et inférieure (54), un deuxième axe (Y) dit transversal qui est parallèle au plan des parois supérieure (53) et inférieure (54) et qui est orthogonal au premier axe (X) et un troisième axe (Z) dit vertical qui est parallèle au plan des parois latérales (55, 56) et qui est orthogonal aux premier et deuxième axes (X, Y), ladite cassette (50) comportant en outre au moins une paire (57) de raccords (58, 59) à fibres optiques, ladite cassette (50) étant **caractérisée en ce que** :
lesdits raccords (58, 59) sont montés chacun dans une chemise (64) selon la revendication 1 ou 2 ;
ladite chemise (64) est montée dans ladite cassette (50) de sorte que le côté de plus grande dimension des raccords (58, 59) s'étend suivant l'axe vertical (Z) ;
la cassette (50) comporte des rainures rectilignes (61) et lesdits raccords (58, 59) sont mobiles en translation dans les rainures rectilignes (61) suivant l'axe longitudinal (X) ; et
la cassette (50) comporte des rainures incurvées (580, 590) et, dans au moins une paire de ladite au moins une paire (57) de raccords (58, 59), les deux raccords (58, 59) sont en outre mobiles en rotation dans les rainures incurvées (580, 590) autour de l'axe vertical (Z) et dans un plan parallèle au plan des parois supérieure (53) et inférieure (54) de ladite cassette (50), l'un desdits deux raccords (58, 59) étant mobile en rotation dans un premier sens de rotation et l'autre desdits deux raccords (58, 59) étant mobile en rotation
dans un second sens de rotation opposé au premier sens de rotation.

6. Cassette (50) selon la revendication précédente, **caractérisée en ce qu'**elle comporte en outre au moins un élément (60) de préhension mobile, ledit élément (60) de préhension mobile étant adapté à commander le mouvement de translation et ledit mouvement de rotation d'une paire de ladite au moins une paire (57) de raccords (58, 59).

7. Cassette (50) selon la revendication 5 ou 6, **caractérisée en ce que** ledit élément (60) de préhension mobile est une gâchette.

8. Panneau de brassage (40) de câbles à fibres optiques, ledit panneau comportant une paroi supérieure (43) et une paroi inférieure (44), ladite paroi inférieure (44) présentant une face extérieure et une face intérieure opposée à la face extérieure, ledit panneau (40) étant **caractérisé en ce qu'**il comporte au moins une cassette (50) selon l'une quelconque des revendications 5 à 7, ladite au moins une cassette (50) étant disposée sur ladite face intérieure de ladite paroi inférieure (44) dudit panneau (40).

9. Panneau de brassage (40) selon la revendication précédente, ledit panneau comportant au moins deux cassettes (50) selon l'une quelconque des revendications 5 à 7, ledit panneau (40) étant **caractérisé en ce que** lesdites au moins deux cassettes (50) sont disposées sur au moins une partie de la largeur du panneau (40) et sur un seul niveau.

10. Panneau de brassage (40) selon la revendication 8 ou 9, **caractérisé en ce qu'**il comporte six cassettes (50).

11. Panneau de brassage (40) selon la revendication 8, 9 ou 10, **caractérisé en ce qu'**il comporte un volet avant (41) amovible.
